Europäisches Patentamt

(19) European Patent Office

Office européen des brevets

(11) **EP 0 515 683 B1**

(12) **EUROPEAN PATENT SPECIFICATION**

(45) Date of publication and mention
of the grant of the patent:
**27.05.1998 Bulletin 1998/22**

(21) Application number: **91904459.4**

(22) Date of filing: **13.02.1991**

(51) Int. Cl.⁶: **B62D 55/253**, B62D 55/20,
B62D 55/24

(86) International application number:
**PCT/JP91/00169**

(87) International publication number:
**WO 91/12165 (22.08.1991 Gazette 1991/19)**

(54) **RUBBER TRACK FOR CRAWLER VEHICLE**

GUMMIRIEMEN FÜR RAUPENKETTENFAHRZEUG

CHENILLE EN CAOUTCHOUC POUR VEHICULES SUR CHENILLES

(84) Designated Contracting States:
**DE FR GB IT**

(30) Priority: **14.02.1990 JP 33371/90**
**14.02.1990 JP 33372/90**
**14.02.1990 JP 33373/90**
**27.02.1990 JP 47002/90**

(43) Date of publication of application:
**02.12.1992 Bulletin 1992/49**

(73) Proprietor:
**KABUSHIKI KAISHA KOMATSU SEISAKUSHO**
**Minato-ku Tokyo 107 (JP)**

(72) Inventor: **HORI, Kazutoshi**
**Komatsu-shi, Ishikawa 923-03 (JP)**

(74) Representative:
**Meissner, Peter E., Dipl.-Ing. et al**
**Meissner & Meissner,**
**Patentanwaltsbüro,**
**Postfach 33 01 30**
**14171 Berlin (DE)**

(56) References cited:
JP-A-55 072 469          JP-A-57 126 766
JP-A-60 001 082          JP-A-62 071 764
JP-B-46 018 170          JP-U-49 020 229
JP-U-53 113 537          JP-U-58 093 579
JP-U-58 100 185          JP-Y-47 019 051
JP-Y-53 020 102

• PATENT ABSTRACTS OF JAPAN vol. 3, no. 93
(M-68) 8 August 1979 & JP-A-54 067 930 (
BRIDGESTONE TIRE K. K. ) 31 May 1979
• PATENT ABSTRACTS OF JAPAN vol. 5, no. 174
(M-96)(846) 10 November 1981 & JP-A-56 099 863
( BRIDGESTONE TIRE K. K. ) 11 August 1981
• PATENT ABSTRACTS OF JAPAN vol. 5, no. 10
(M-51)(682) 22 January 1981 & JP-A-55 140 663 (
BRIDGESTONE TIRE K. K. ) 4 November 1980
• PATENT ABSTRACTS OF JAPAN vol. 4, no. 49
(M-7)(531) 15 April 1980 & JP-A-55 019 634 (
ISEKI NOKI K. K. ) 12 February 1980

## Description

TECHNICAL FIELD

The present invention relates to a rubber crawler belt of a tracked vehicle according to the preamble of claim 1.

Such a rubber crawler belt is known from JP-A-54 67 930.

Conventionally, a tracked vehicle represented by a construction machine, such as a bulldozer and a hydraulic excavator, is driven by iron crawler belts rotated by power transmitted through drive wheels. The iron crawler belts are supported by, the drive wheels, free wheels and upper and lower rollers provided between the drive and free wheels. Recently, rubber crawler belts also have been used instead of iron crawler belts in order to reduce noise and vibrations coming from the crawler belts and wheels. The rubber crawler belts are formed by equidistantly embedding metallic core members in endless rubber belts. The rubber crawler belts are driven by the engagement between the core members and the teeth of the drive wheels.

Generally, an iron crawler belt engages with every other tooth of an odd number of teeth of a drive wheel. Therefore, the teeth which engage with the iron crawler belt shift by one pitch every rotation thereof. In other words, every other teeth comes into engagement during one rotation and the other tooth come in the engagement during the next rotation. Such an every-other-tooth engagement reduces abrasion loss of the teeth of the drive wheel. However, this every-other-tooth engagement results in a large link pitch of the crawler belts in a large vehicle. When such a crawler belt is wound on the drive wheel and the free wheel, a large bending angle results between neighboring links and, thus, the crawler belt forms a polygonal shape. Thus, there is a problem that the impact of the links to the drive and free wheels becomes great and causes substantial noise and vibrations.

Such a problem is also found in a rubber crawler belt. In addition to that, a large bending angle of a rubber crawler belt wound on the drive and free wheels produces a large strain in the lugs provided on the ground-contact surface of the rubber crawler belt and may result in a crack in a lug. Thus, durability of the rubber crawler belt decreases.

It has been believed that as in the case of an iron crawler belt, a single tooth of the drive wheel transmits more than a half of the entire driving force to a rubber crawler belt. Therefore, since the rubber and the core members must be adhered firmly, the area of right and left wing portions of a core member is made large to provide sufficient adhesion strength. As a result, the front-rear directional dimension of the wing portions of a core member becomes larger than the interval between the tips of the teeth, and, hence, makes it impossible to arrange core members so as to leave gaps therebetween which enable the teeth of a drive wheel to serially engage with the core members. Inevitably, a rubber crawler belt is formed which has a large double-pitch for every-other-tooth engagement. Since such a rubber crawler belt has large gaps between rolling rail surfaces formed on the core members, lower rollers fall into the gaps during travelling of the vehicle and, thus, cause driving vibrations.

A rubber crawler belt of a short pitch may be formed which engages with every tooth of a drive wheel instead of every other tooth. However, there is another requirement that a large ground-contact area of the lugs of a rubber crawler belt be provided in order to obtain low lug-surface pressure, i.e., to provide sufficient abrasive service-life of the lugs. Therefore, if one lug is provided for one core member in such a short-pitch rubber crawler belt, freedom with respect to the shape of the lug decreases, and a large sheered-area of soil cannot be obtained, resulting in reduced tractive power.

Further, because grooves are formed as bending portions between the core members, lower rollers are not firmly supported by portions between the core members. Therefore, there is a problem that during travelling of the vehicle, the lower rollers fall in between the core members and, hence, inevitably cause vibrations.

When a rubber crawler belt is wound and bent on a drive wheel and a free wheel, grooves formed between the core members are substantially distorted since rigidity of the grooves is low. Therefore, flapping of the crawler belt and bumping noise are likely to result.

Since lugs are separately provided for the individual core members, the lugs clutch into the ground intermittently, thus increasing vibratory force of the crawler belt.

There is a short-pitch rubber crawler belt comprising right and left-side lugs which substantially cover the projection planes of the right and left wing portions, respectively, of two neighboring core members, and which are shifted by one pitch from each other. However, because gaps between the lugs of both right and left sides exist between core members and the gaps between the lugs of one side are shifted by one pitch from the gaps between the lugs of the other side, rigidity of rubber portions between the core members significantly differs between the right side and the left side. When this rubber crawler belt is wound and bent on a drive wheel and a free wheel, the crawler belt may be twisted and break at a gap. In addition, there is a problem in that the lower roller which has come between core members falls toward the gap between lugs.

The present invention is intended to solve the above problems of the conventional art. It is an object of the present invention to provide a short-pitch rubber crawler belt of a tracked vehicle which engages with every tooth of the drive wheel, reduces noise and vibrations caused during travelling of the vehicle, increases rigidity of the crawler belt and tractive power, and reduces the bending strain of the crawler belt and the abrasion of lugs.

DISCLOSURE OF THE INVENTION

According to the present invention, these objects are achieved by the apparatus defined in independent claim 1. Embodiments of the invention are disclosed in the dependent claims.

BRIEF DESCRIPTION OF THE DRAWINGS

Fig. 1 is a plan view of a core member of a rubber crawler belt according to the first embodiment of the present invention, viewed from the side on which a roller turns;

Fig. 2 is a front view of the core member shown in Fig. 1;

Fig. 3 is a sectional view taken along the line C-C of the Fig. 2;

Fig. 4 is a partial plan view of a rubber crawler belt taken from the side on which a roller turns;

Fig. 5 is a sectional view taken along the line D-D of Fig. 4;

Fig. 6(a) is a partial side view illustrating engagement between a drive wheel and a rubber crawler belt in which core members are embedded;

Fig. 6(b) is a partial side view illustrating engagement between a drive wheel and a rubber crawler belt according to the conventional art;

Fig. 7(a) is a a partial plan view of a rubber crawler belt in which core members according to a modification of the first embodiment are embedded, taken from the side on which a roller turns, according to a modification of the first embodiment;

Fig. 7(b) is a sectional view taken along the line E-E of Fig. 7(a).

Fig. 8(a) is a partial plan view of a rubber crawler belt according to the second embodiment of the present invention and taken from the ground-contact side;

Fig. 8(b) is a view taken in the direction indicated by the arrow X of Fig. 8(a);

Fig. 8(c) is a view taken in the direction indicated by the arrow Y of Fig. 8(a);

Figs. 9 to 11 are views of rubber crawler belts taken from the ground-contact side and illustrating lug patterns according to modifications of the second embodiment;

Fig. 12(a) is a partial plan view of a rubber crawler belt according to still another modification of the second embodiment and taken from the ground-contact side;

Fig. 12(b) is a partial side view of the rubber crawler belt shown in Fig. 12(a);

Fig. 12(c) illustrates the function of a front-side slant surface formed between the front side of the lug and the bottom surface of a groove shown in Fig. 12(a);

Figs. 13 to 14 are views of rubber crawler belts, taken from the ground-contact side and illustrating lug patterns according to still other modifications of the second embodiment;

Fig. 15(a) illustrates a rubber crawler belt according to the present invention, with a lower roller positioned between core members of the rubber crawler belt;

Fig. 15(b) illustrates a conventional rubber crawler belt with a lower roller positioned between core members of the rubber crawler belt; and

Fig. 16 is a partial side view of a rubber crawler belt being bent at a preset angle.

THE BEST MODE FOR CARRYING OUT THE INVENTION

The first embodiment of the rubber crawler belt of a tracked vehicle according to the present invention will be described with reference to the drawings.

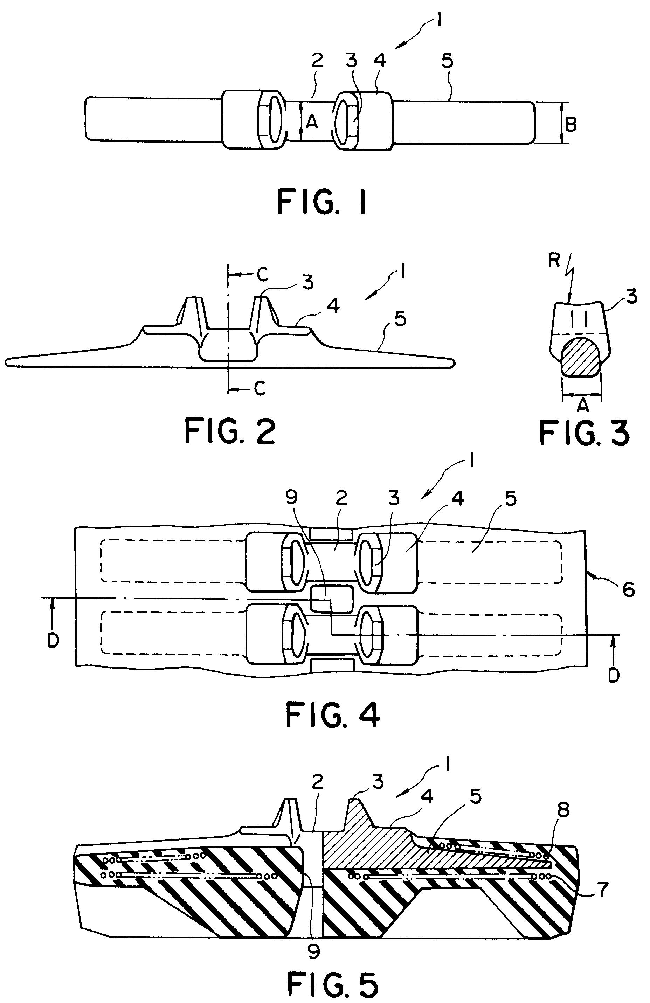

Referring to Figs. 1 to 3, a core member 1 has an engaging portion 2 formed at a center portion thereof with respect to the width so as to engage with a drive wheel, which is used for both a rubber crawler belt and an iron crawler belt. The engaging portion 2 has a semicircular shape and a dimension A in front-rear directions which is shorter than the distance between the tips of the teeth of the drive wheel. Since the engaging portion 2 slidingly contacts the teeth of the drive wheel, the engaging portion 2 has a hardened surface. Guide projections 3 are provided on both side of the engaging portion 2. The guide projections 3 guide the rubber crawler belt so that the rubber crawler belt stays on the rolling plane of rollers. As shown in Fig. 3, the top surface of a guide projection is formed in the shape of arc having a radius equal to or slightly smaller than the rolling radius R of the guiding rollers so as to contact the circumference of each roller by plane contact or two-line contact. A rolling rail surface 4 for lower rollers is formed on the outer side of a base portion of each guide projection 3. Wing portions 5 extend outward from the rolling rail surfaces. The wing portions have a front-rear directional dimension B which is smaller than the distance between the tips of the teeth of the drive wheel and approximately equal to the dimension A of the bottom portion of the engaging portion 3,

$$A \fallingdotseq B$$

As shown in Figs. 4 and 5, the engaging portion 2, the guide projections 3 and the rolling rail surfaces 4 of the core member 1 lie bare and the rest is buried in the rubber crawler belt 6.

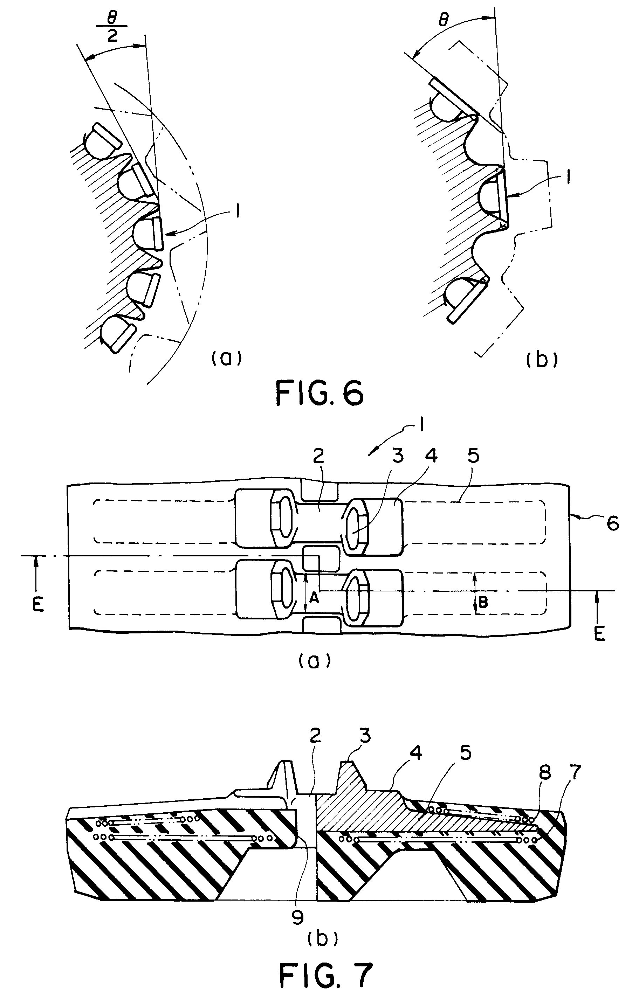

To embed such core members 1 in a rubber belt 6, the core members 1 are arranged so that the distance between the axis of the engaging portion and the axis of the neighboring engaging portion 2 will be equal to one pitch, which is the distance between the center dividing a tooth-bottom portion of the drive gear into two equal parts along the circumference and the center of the neighboring tooth-bottom portion. Thus, the core members 1 are arranged so that the distance between the core members 1 are equal to or less than the distance between the tips of the teeth of the drive gear and every tooth engages with the core member 1. The bend angle θ/2 of the rubber crawler belt as shown in Fig. 6(a) is substantially a half of the bend angle θ of the conventional rubber crawler belt as shown in Fig. 6(b). The rolling rail surfaces 4 of neighboring core members 1 are close to each other so that sinking of the lower rollers is reduced and, as a result, noise during driving is reduced.

Fig. 7(a) illustrates a core member 1 according to a modification of the first embodiment. To further reduce vibration and noise during driving, the core member is modified as follows. Left-side guide projection 3 and rolling rail surface 4 and right-side guide projection 3 and rolling rail surface 4 are offset from each other in the front-rear directions with respect to the axis of an engaging portion 2, which engages with a drive wheel. Therefore, a major portion of a roller remains in contact with either the left or right rolling rail 4 and the roller hardly falls in a gap between the rolling rail surfaces 4 even while the roller is rolling between core members 1. As a result, the vibration and noise caused during driving is further reduced. The widthwise center line of right and left wing portions 5 coincides with the axis of the engaging portion 2. Though a drive wheel for an iron crawler belt is used for a rubber crawler belt according to this embodiment, such a feature is not restrictive.

The first embodiment has the following advantages:

(1) Because the gap between neighboring core members is reduced, falling of the lower rollers from the rolling surface is reduced. The front-rear directional dimension of the rolling rail surfaces 4 of each core member 1 is reduced, the core members 1 do not substantially tilt and if they do tilt, the falling of the lower rollers is minor. Thus, the amount of vibrations reaching the operator or the ground is substantially reduced.

(2) Because the pitch of the core members 1 is reduced, the bend angle of the crawler belt positioned around the drive wheel and the guiding wheel is reduced to approximately 1/2 of the bend angle of the conventional crawler belt, the energy caused by bumping between the crawler belt and the drive and guide wheels is reduced. As a result, bumping noise is reduced and flapping of the crawler belt is significantly reduced. Further, because the bend angle of the crawler belt is reduced, bending strain is reduced and, as a result, durability of the rubber crawler belt 6 is enhanced.

(3) Because the gap between neighboring core members 1 is narrowed, i.e., because a portion of the crawler belt formed only of a rubber layer is narrowed, movement of each core member 1 is restricted and rigidity of the crawler belt is increased. Thus, off-tracking of the crawler belt is substantially prevented.

(4) Because the vibration of the crawler belt is reduced, driving force is effectively transmitted to the ground without breaking clods of soil gripped in grooves 12 of lugs. Tractive power is thus increased.

(5) Because reduced vibration of the crawler belt and increased tractive power will reduce the incidence of slipping of the crawler belt, abrasion of the lug is reduced and durability of the rubber crawler belt 6 is improved.

(6) Because there is no need to change drive wheels when iron crawler belts are replaced with the rubber crawler belts 6, it is easy to change crawler belts.

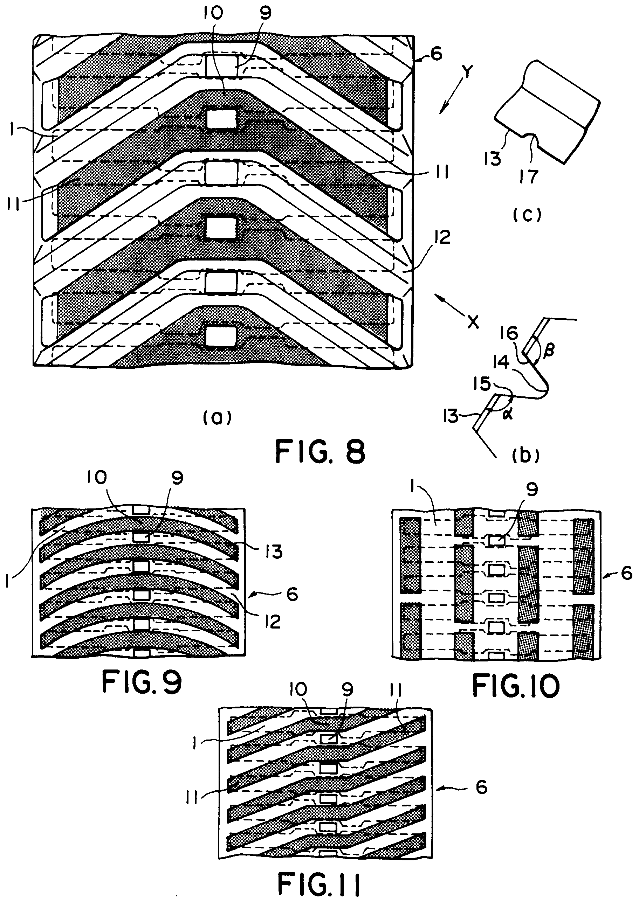

Next, the second embodiment and its modifications according to the present invention will be described in detail with reference to the drawings. In Figs. 8 to 14, top surfaces of lugs of rubber crawler belts are shadowed to help understand the illustrations.

Fig. 8(a) is a partial plan view of a lug pattern of a rubber crawler belt 6 according to the second embodiment. The rubber crawler belt 6 has core members 1 embedded and arranged therein so that each core member 1 engages with each tooth of a drive wheel. Widthwise center portions between neighboring core members 1 are provided with engaging holes 9 which engage with the drive wheel. When an engaging portion 2 of a core member 1 engages with a tooth of the drive wheel, the tooth tip does not substantially strike any portion but enters the engaging hole 9.

A lug formed on the ground-contact surface of the rubber crawler belt 6 is formed of a central portion 10 and branch portions 11 extending diagonally backward to the right and left edges from the central portion 10. The branch portion 11 of each lug are formed so as to cross each other in the central portion 10 and extend across the projection planes of three adjacent core members 1. Further, the branch portions 11 are formed so as to cross a gap portion between neighboring core members 1 in at least one location in the widthwise right and left sides, respectively. Thus, the right and let sides of each core member 1 are evenly supported by lugs. Further, since the rolling rail surfaces 4 are offset from each other in the front-rear directions, falling of the rollers into gaps between the metals 1 is extremely small.

The central portion 10 of a lug is disposed at every other engaging hole 9. Grooves 12 are formed between neighboring lugs. When the vehicle is going forward, the central portion 10 of a lug first comes into contact with the ground followed by the branch portions 11, and during this process, the next lug comes into contact with the ground. Thus, the lugs are continuously in contact with the ground.

According to the conventional art, since one lug is provided for one core member, the lugs intermittently clutch into the ground and, as a result, the crawler belts vibrate substantially. Such a problem is substantially eliminated according to the present invention.

As shown in Fig. 8(b), slant surfaces between a lug top surface 13 and a bottom surface of a groove 12 are so formed that the angle $\alpha$ between the lug top surface 13 and a lug's- front-side slant surface 15 is larger than the angle $\beta$ between the lug top surface 13 and a lug's rear-side slant surface 16. Therefore, a force is generated which pushes a sheered soil clod rearward and downward. If there is a possibility that durability may become insufficient because rubber strain is increased by changing the shapes of the core members, the rubber materials or the height of the lug top surfaces from the bottom surfaces of the grooves 12, the crawler belt may be formed with a preset angle provided. Further, as shown in Fig. 8(c), a smallest possible recess portion 17 may be formed in a portion of a lug top surface 13.

Fig. 9 is a partial plan view of a rubber crawler belt according to a modification of the second embodiment. Each lug has a shape formed between two arcs having the centers in a widthwise center portion of the crawler belt. The two arcs have different centers and radii so that the front-rear directional dimension of the lug is greatest at its center portion and becomes less toward the left and right edges. A widthwise central portion of the rubber crawler belt 6 is provided with engaging holes 9, which receive the tip of the teeth of a drive wheel without bumping on them when engaging with the drive wheel. Central portions 10 of the lugs are located between the engaging holes 9. Grooves 12 are formed between neighboring lugs. Each lug extends over two core members 1. As in the above-described second embodiment, surfaces are formed between lug top surfaces 13 and grooves 12 so that the angle between the top surface and the front-side surface of a lug is greater than the angle between the top surface and the rear-side surface of the lug.

Fig. 10 is also a partial plan view of a rubber crawler belt according to a modification of the second embodiment. Belt-like lugs extending in front-rear directions are provided between the right and left edges of a rubber crawler belt 6 and the right and left ends of a widthwise central portion 10. These lugs are arranged in four rows extending in the front-rear directions. Each lug extends over three core members 1. The lugs in the inner two rows are shifted by one pitch from the lugs in the right and left-edge rows.

Fig. 11 is a partial plan view of a rubber crawler belt according to a modification of the second embodiment. Each lug is formed of a central portion 10 with respect to the width of a rubber crawler belt 6 and a branch portion 11 extending from the central portion 10 diagonally upward toward the right and diagonally downward toward the left. The central portions 10 are located between engaging holes 9, which receive the tips of the teeth of a drive wheel without bumping them when engaging with the drive wheel. The right and left branch portions 11 are parallel to each other. Each lug extends over three core members 1.

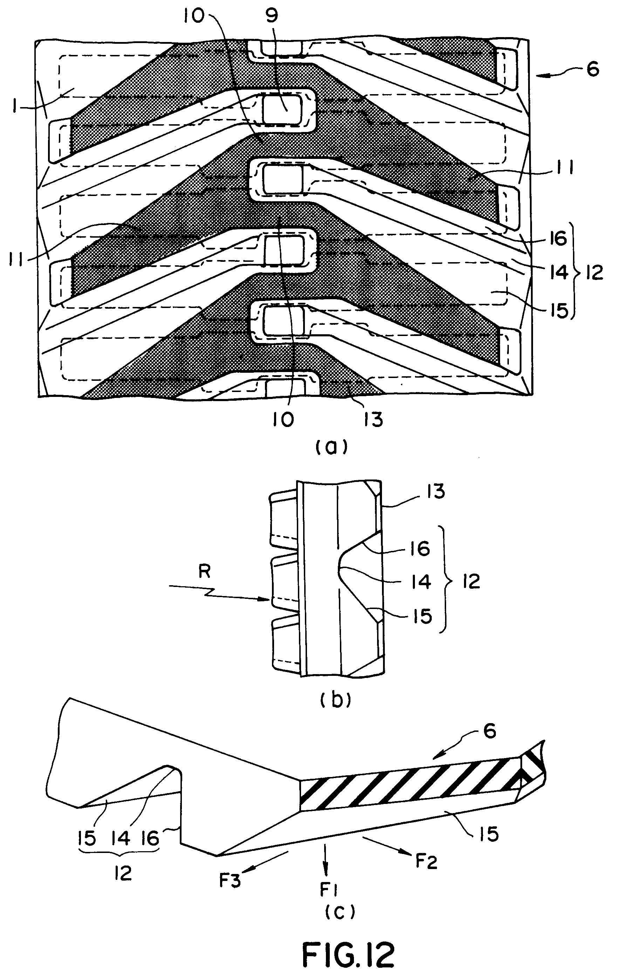

Fig. 12(a) is a partial plan view of a rubber crawler belt according to another modification of the second embodiment. A lug is formed of central portions 10 which are provided between neighboring engaging holes 9 and 9 and branch portions 11 which each connects two neighboring central portions 10 and 10 sandwiching an engaging hole 9 and extends diagonally backward toward the right or left edge of the rubber crawler belt 6.

The right and left branch portions 11 are shifted from each other by one pitch of core members 1. Thus, the right and left branch portions 11 are asymmetric with respect to the widthwise center line of the rubber crawler belt 6. Each branch portion 11 is formed so as to extend diagonally backward across the projection planes of three adjacent core members 1. The top surface 13 of the lug is formed of the central portions 10 and the branch portions 11 extending therefrom so as to surround each engaging hole 9 on three sides in a "U" shape and continuously zigzag all around the periphery of the rubber crawler belt 6.

The front-rear directional dimension of the portion of the lug top 13 surface in each branch portion 11 becomes less from the central portion 10 toward the left or right edge. Accordingly, the front-rear directional dimension of each groove 12 becomes greater from the central portion 10 toward the left or right edge.

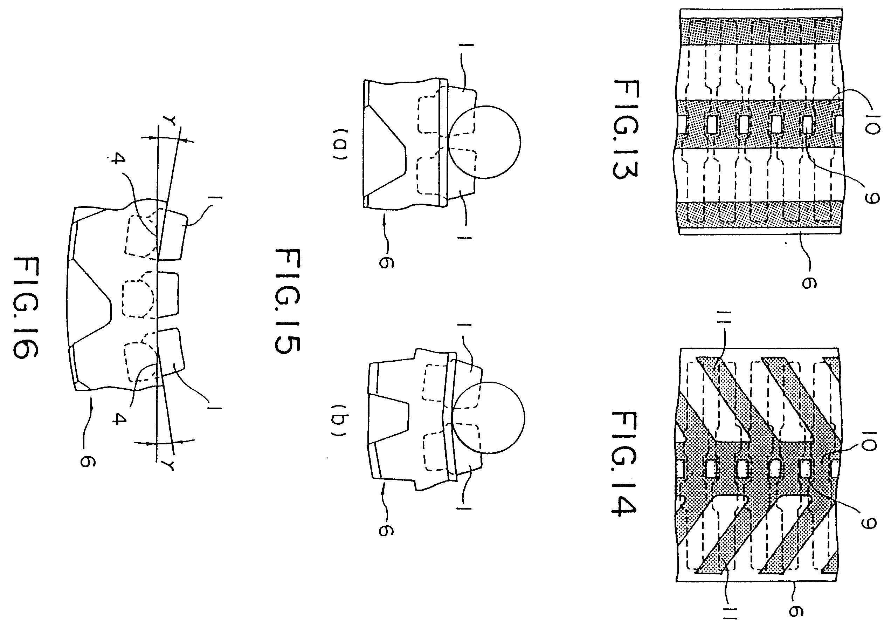

Fig. 13 is a partial plan view of a rubber crawler belt according to still another modification of the second embodiment. Lugs are provided in a widthwise central portion 10 and in edge portions of a rubber crawler belt 6 so as to continuously extend all around the outer periphery of the rubber crawler belt 6. These lugs are belts parallelly extending in the front-rear directions. The lug in the central portion 10 is wider than the lugs in the edge portions. The lug in the central portion 10 is provided with engaging holes 9 which receive the tip of the teeth of a drive wheel without bumping them when engaging with the drive wheel.

Fig. 14 is a partial plan view of a rubber crawler belt according to a further modification of the second embodiment. A lug is formed of a widthwise central portion 10 of a rubber crawler belt 6 and branch portions 11, 11 extending from the central portion 10 diagonally backward toward the right and left edges. The central portion 10 is formed as a belt continuously extending all around the outer periphery of the rubber crawler belt 6. The central portion 10 is provided with engaging holes 9 which receive the tips of the teeth of a drive wheel without bumping them when engaging with the drive wheel.

The lug patterns of the rubber crawler belts 6 shown in Figs. 8, 9 and 14 have front-rear directional features. Hence, a greater tractive force is obtained when the vehicle goes forward. The lug pattern of the rubber crawler belt 6 shown in Fig. 12 facilitates the release of soil clods gripped in the grooves 12 since the grooves 12 becomes wider toward the left and right edges. The lug patterns of the rubber crawler belts 6 shown in Figs. 10, 11 and 13 exhibit high resistance against side slip and favorably contribute to linear travelling of the vehicle, though these lug patterns are not very advantageous in tractive power.

Thus, as a principle structure, a rubber crawler belt 6 has core members 1 embedded therein which engage with each tooth of a drive wheel. Further, as a basic structure according to the second embodiment, the rubber crawler belt has lugs which are formed on the ground-contact surface. At least one lug is provided in each of the right and left portions of the projection plane of a core member 1, and such a lug extends across the projection planes of a plurality of adjacent core members 1. Each of the widthwise right and left portions of a gap between neighboring core members 1 is crossed by a lug in at least one location. As a result, freedom in the shape of a lug is significantly increased compared with the conventional art, allowing the formation of a lug most suitable for the operational conditions of a given vehicle.

The advantages of the second embodiment and its modifications are as follows:

(1) Because the falling of the rollers into gaps between the core members 1 is reduced, the level of vibrations reaching the operator and the ground is substantially reduced.
(2) Enhanced rigidity of the crawler belt substantially prevents the crawler belt from twisting, flapping and going off track. Because the damping force caused by bending portions when the crawler belt is bent is increased, the impact caused by bumping of the crawler belt against the drive wheel and a free wheel is reduced and, hence, the noise caused by the bumping of the crawler belt is reduced. Further, reduced bending stress of the crawler belt substantially prevents breakage of the rubber crawler belt 6.
(3) Because of above-mentioned reduced vibrations and upgraded shapes of the lug top surfaces and grooves, driving force can be effectively transmitted to the ground without breaking the soil clods gripped in the grooves. Tractive power is thus increased.
(4) Because reduced vibration of the crawler belt and increased tractive power will reduce the incidence of slipping of the crawler belt, abrasion of the lug is reduced and durability of the rubber crawler belt 6 is improved.

Next, the third embodiment of the present invention will be described in detail with reference to the drawings.

Referring to Figs. 12(a) and 12(b) illustrating a partial side view of the rubber crawler belt shown in Fig. 12(a), the front-rear directional dimension of a lug top 13 surface of each branch portion 11 becomes less from a central portion 10 of the rubber crawler belt 6 toward the left or right edge. Accordingly, the front-rear directional dimension of each groove 12 becomes greater from the central portion 10 toward the left or right edge. Slant surfaces are formed between the lug top surface 13 and groove bottom surfaces 14 formed at a predetermined depth from the lug top surface 12. The slant surfaces on the front side of the lug are formed as planes 15 in which the slant angle becomes less toward the right and left edges. The slant surfaces on the rear side of the lug are formed as planes 16 having a consistent slant angle from the central portion to the right and left edges.

Fig. 12(c) illustrates the function of a front-side slant surface formed between the front side of a lug and a groove bottom surface. Generated are a force F1 which pushes the sheered soil clod downward from the rubber crawler belt 6, a force F2 which pushes the sheered soil clod backward and a force F3 which pushes the sheered soil clod outward. The forces F1 and F3 expand the area in which the soil pressure is generated by the driving force of the rubber crawler belt, providing the same effect as provided by a widened rubber crawler belt. The tractive power is thus increased. The force F1 acting downward causes a wedge effect in the downstream of the free wheels so that the lugs will easily clutch into soil. When the rubber crawler belt slips, the force F1 and the force F3 acting toward the Outsides of the right and left edges push the soil clods out and down from the rubber crawler belt 6. Thus, soil hardly sticks in the grooves. The rubber crawler belt easily releases soil.

Next, the fourth embodiment of the present invention will be described in detail with reference to the drawings.

As shown in Fig. 7(b), which is a sectional view of the rubber crawler belt 6 taken along the line E-E of the Fig. 7(a), many steel core lines 7 are buried close to the bottom surface of core members 1 in a rubber crawler belt 6 and extend in the front-rear directions all through the rubber crawler belt 6. Further, many steel or synthetic resin core lines 8 are buried close to the top surface of core members 1 and extend in the front-rear directions all through the rubber crawler belt 6. The other structures are the same as in the first embodiment.

Since the core lines 7, 8 are buried under and over the core members 1, when a tracked vehicle having rubber crawler belts 6 as described above is driven, the amount of tilt of the core members 1 caused when lower rollers roll across gaps between the core members 1 can be substantially reduced. Further, the bonding strength between the rubber crawler belt 6 and the core members 1 is enhanced. As a result, rigidity of the crawler belt is enhanced, and partly because the right and left rolling rail surfaces 5 of the core members 1 are offset from each other in the front-rear directions, the amount of falling of the lower rollers into the gaps between the core members 1 is reduced from the falling amount in the conventional art as indicated in Fig. 15(b) to the falling amount in this embodiment as indicated in Fig. 15(a). The amount of vibrations is significantly reduced.

Further, the enhanced rigidity of the rubber crawler belt 6 substantially prevents the rubber crawler belt from twisting and going off track, and disperses the strain in the bending portions of the crawler belt, thus substantially preventing the crawler belt from flapping.

Though an example of the lugs provided on the ground-contact surface of the rubber crawler belt 6 is described in this embodiment, other lug patterns within the spirit and scope of the claims may be used instead.

Next, the fifth embodiment of the present invention will be described in detail with reference to the drawings.

As shown in Fig. 16, a rubber crawler belt 6 is formed with a preset angle $\gamma$ so that rolling rail surfaces 4 of neighboring core members 1 will bend toward the roller-rolling side (the inside of the rubber crawler belt) . It is preferable that the angle $\gamma$ be about 5°. The other structures are the same as in the first embodiment.

As described above, the rubber crawler belt 6 is formed so as to remain bent even when bearing no load. Such a structure substantially prevents the rubber crawler belt 6 suspended between the drive wheels and the free wheels from flapping during travelling of the vehicle. Further, such a structure reduces the strain caused between the core members 1 in the rubber crawler belt 6 being wound around the drive wheel or the free wheel and, hence, reduces the force required for such winding. Therefore, travelling resistance is reduced, and reverse bending of the rubber crawler belt between the lower rollers or between the lower roller and the drive wheel is substantially prevented.

Next, the sixth embodiment of the present invention will be described with reference to the drawings.

Grooves 12 as shown in Figs. 12(b) and 12(c) are formed in the lug pattern of a rubber crawler belt 6 as shown in Fig 12(a). Core members embedded in the rubber crawler belt 6 have a front-rear directional dimension B of the right and left wing portions 5 approximately equal to the front-rear directional dimension A of the engaging portions 2, which engage with the drive wheel, as shown in Fig. 7(a). As shown in Fig. 12(b), many steel or synthetic resin core lines 7, 8 are buried over and under the core members 1 in the rubber crawler belt 6 and extend in the front-rear directions all through the rubber belt 6. The rolling rail surfaces 4 of neighboring core members 1 are angled with a preset angle $\gamma$ so that the rubber crawler belt 6 will bend toward the roller-rolling side (the inside of the rubber crawler belt).

Such a structure provides advantages including the advantages of the first to fifth embodiments.

## INDUSTRIAL APPLICABILITY

The present invention provides a short pitch crawler belt which engages with all the teeth of the drive wheel. A rubber crawler belt according to the present invention reduces vibrations and noise caused during travelling of the vehicle, enhances tractive power and rigidity of the crawler belt, and reduces abrasion of the lug and bending strain of the crawler belt, and hence may be suitably employed in a tracked vehicle, particularly in a construction machine such as a bulldozer or a hydraulic excavator.

## Claims

1. A rubber crawler belt (6) of a tracked vehicle, wherein core members (1) are embedded in said rubber crawler belt and arranged so as to engage serially with every tooth of a drive wheel, and engaging holes (9) for engaging with said drive wheel are formed between neighbouring core members and in a widthwise central portion of said rubber crawler belt, said rubber crawler belt of a tracked vehicle characterized in that

   a lug (10,11) is formed on the ground-contact surface of said rubber crawler belt (6) so as to extend across both the right and left-side portions of the projection planes of more than two of adjacent core members (1) and gaps between said adjacent core members,
   a portion of said lug is formed so as to have a surface continuously extending all around said rubber crawler belt (6),
   said lug is composed of a central portion (10) with respect to the width of said rubber crawler belt (6) and branch portions (11) extending from said central portion (10) diagonally backward toward the right and left edges, and said branch portions (11) cross each other at said central portion (10).

2. A rubber crawler belt of a tracked vehicle according to claim 1, wherein said lug (10,11) has a shape formed between two arcs having their centers in said central portion (10) of said rubber crawler belt (6).

3. A rubber crawler belt of a tracked vehicle according to claim 1, wherein said lug (10,11) is composed of belt-like lugs extending in the front-rear directions , said belt-like lugs being provided at right and left edges of said rubber crawler belt (6) and also between said central portion (10) and said right and left edges, and wherein said belt-like lugs provided between said central portion and said right and left edges are offset from said belt-like lugs provided at said right and left edges by one pitch of said core members (1).

4. A rubber crawler belt of a tracked vehicle according to claim 1, wherein said lug (10,11) is composed of said central portion (10) and a right branch portion extending from said central portion (10) diagonally upward toward the right edge and a left branch portion extending from said central portion (10) diagonally downward toward the left edge, and wherein said right branch portion and said left branch portion are parallel to each other.

5. A rubber crawler belt of a tracked vehicle according to claim 1, wherein said lug (10,11) is composed of said central portion (10) provided between neighboring engaging holes (9) and right and left branch portions (11) extending from said central portion diagonally backward toward the right and left edges of said rubber crawler belt (6), said right and left branch portions being shifted from each other by one pitch of said core members (1), and wherein the front-rear directional dimension of a lug top surface (13) of each branch portion becomes less from said central portion toward the right and left edges of said rubber crawler belt, and said central portion and said branch portions form the lug top surface of said central portion having a "U" shape surrounding each engaging hole on three sides, and said lug top surface of said central portion continuously zigzags all around the periphery of said rubber crawler belt.

6. A rubber crawler belt of a tracked vehicle according to claim 1, wherein said lug (10,11) is composed of a lug provided in said central portion (10) of said rubber crawler belt (6) and lugs provided on the right and left edges of said rubber crawler belt, and said three lugs extend parallelly to one another in the front-rear directions of said rubber crawler belt.

7. A rubber crawler belt of a tracked vehicle according to claim 1, wherein said lug (10,11) is composed of a central portion (10) with respect to the width of said rubber crawler belt (6) and branch portions (11) extending from said central portion diagonally backward toward the right and left edges, and said central portion is formed as a belt extending in the front-rear directions of said rubber crawler belt, and said branch portions cross each other at said central portion.

8. A rubber crawler belt of a tracked vehicle according to claim 5, wherein corresponding to the front-rear directional dimension of said lug top surface (13) of each branch portion of said rubber crawler belt (6) becoming less, the front-rear directional dimension of each groove (12) formed between said neighboring lug top surfaces becomes greater from said central portion toward said right and left edges of said rubber crawler belt, and slant surfaces (15, 16) are formed between said lug top surface and a groove bottom surface (14) formed at a predetermined depth from said lug top surface, and the slant surface (15) on the front side of said lug is formed as a plane in which a slant angle becomes less from said central portion toward said right and left edges, and the slant surface (16) on the rear side of said lug is formed as a plane having a consistent slant angle from said central portion to said right and left edges.

9. A rubber crawler belt of a tracked vehicle according to claim 1, wherein many core lines (7,8) are provided close to at least one of the upper surfaces and the lower surfaces of said core members (1) embedded in said rubber crawler belt (6) and extend in the front-rear directions of said rubber crawler belt.

10. A rubber crawler belt of a tracked vehicle according to claim 9, wherein said rubber crawler belt (6) is provided with a preset angle so that rolling rail surfaces (4) of neighboring core members (1) will bend toward the roller-rolling side.

11. A rubber crawler belt of a tracked vehicle according to claim 8, wherein each of said core members (1) embedded in said rubber crawler belt (6) has an engaging portion (2) for engaging with said drive wheel and which is provided in a central portion of said core member with respect to the width of said rubber crawler belt and has wing portions (5) provided on the right and left sides of said engaging portion, and the front-rear directional dimension of said engaging portion is approximately equal to the front-rear directional dimension of said wing portions, and further has a pair of a guide projection (3) and a rolling rail surface (4) which are continuously provided with each of the right and left sides of said engaging portion, the positions of which in each of the right and left sides are offset in the front-rear direction, and wherein many core lines (7,8) are provided close to at least one of the upper surfaces and the lower surfaces of said core members and extend in the front-rear directions of said rubber crawler belt.

**Patentansprüche**

1. Gummiraupenkette (6) eines Raupenfahrzeugs, bei der Kerneinlagen (1) in diese eingebettet und so angeordnet sind, daß sie nacheinander mit einem jeden Zahn eines Antriebsrads in Eingriff gelangen, und zwischen benachbarten Kerneinlagen und in einem auf die Breite bezogenen mittleren Abschnitt der Gummiraupenkette Eingriffsöffnungen (9) zur Gewährleistung des Eingriffs mit dem Antriebsrad vorhanden sind, wobei die Gummiraupenkette eines Raupenfahrzeugs dadurch gekennzeichnet ist, daß

an der mit dem Boden in Berührung kommenden Oberfläche der Gummiraupenkette (6) ein Stollen (10, 11) in der Weise ausgebildet ist, daß er sich sowohl über den rechten als auch den linken Teil der Projektionsebenen von mehr als zwei benachbarten Kerneinlagen (1) und die Zwischenräume zwischen den benachbarten Kerneinlagen erstreckt,
ein Abschnitt des Stollens so geformt ist, daß er eine sich durchgehend über den Umfang der gesamte Raupenkette (6) erstreckende Oberfläche aufweist,
und der Stollen einen bezüglich der Breite der Gummiraupenkette (6) mittleren Abschnitt (10) und von dem mittleren Abschnitt (10) diagonal rückwärts in Richtung des rechten und linken Randes verlaufende Abzweigungen (11) umfaßt und diese Abzweigungen (11) einander im mittleren Abschnitt (10) kreuzen.

2. Gummiraupenkette eines Raupenfahrzeugs nach Anspruch 1, bei der der Stollen (10, 11) eine Form aufweist, die von zwei Bögen begrenzt ist, deren Mittelpunkte im mittleren Abschnitt (10) der Gummiraupenkette (6) liegen.

3. Gummiraupenkette eines Raupenfahrzeugs nach Anspruch 1, bei der der Stollen (10, 11) sich in Richtung von der Vorder- zur Rückseite erstreckende bandförmige Stollen umfaßt, die am rechten und linken Rand der Gummiraupenkette (6) sowie zwischen dem mittleren Abschitt (10) und dem rechten und linken Rand angeordnet sind, und bei der die bandförmigen Stollen zwischen dem mittleren Abschnitt und dem rechten und linken Rand gegenüber den bandförmigen Stollen am rechten und linken Rand um den Abstand einer Einlage der Kerneinlagen (1) versetzt sind.

4. Gummiraupenkette eines Raupenfahrzeugs nach Anspruch 1, bei der der Stollen (10, 11) den mittleren Abschnitt (10), eine sich vom mittleren Abschnitt (10) diagonal aufwärts in Richtung des rechten Randes erstreckende rechte Abzweigung und eine sich diagonal abwärts in Richtung des linken Randes erstreckende linke Abzweigung umfaßt und bei der die rechte und die linke Abzweigung parallel zueinander verlaufen.

5. Gummiraupenkette eines Raupenfahrzeugs nach Anspruch 1, bei der der Stollen (10, 11) einen zwischen benachbarten Eingriffsöffnungen (9) vorhandenen mittleren Abschnitt (10) und von dem mittleren Abschnitt diagonal rückwärts in Richtung des rechten und linken Randes der Gummiraupenkette verlaufende rechte und linke Abzweigungen (11) umfaßt, wobei die rechte und linke Abzweigung (11) jeweils gegeneinander um den Abstand einer Einlage der Kerneinlagen (1) versetzt sind, und bei der das sich in Richtung von der Vorder- zur Rückseite ergebende Maß einer Oberfläche der Stollenoberseite (13) jeder Abzweigung vom mittleren Abschnitt zum rechten und linken Rand der Gummiraupenkette hin abnimmt, der mittlere Abschnitt und die Abzweigungen die Oberfläche der Stollenoberseite des in U-Form ausgeführten und jede Eingriffs-öffnung von drei Seiten umschließenden mittleren Abschnitts bilden und die Oberfläche der Stollenoberseite des mittleren Abschnitts durchgehend am gesamten Umfang der Gummiraupenkette zickzackförmig angeordnet ist.

6. Gummiraupenkette eines Raupenfahrzeugs nach Anspruch 1, bei der der Stollen (10, 11) einen Stollen im mittleren Abschnitt (10) der Gummiraupenkette (6) sowie am rechten und linken Rand der Gummiraupenkette angeordnete Stollen umfaßt und sich die drei Stollen parallel zueinander in Richtung von der Vorder- zur Rückseite der Gummiraupenkette erstrecken.

7. Gummiraupenkette eines Raupenfahrzeugs nach Anspruch 1, bei der der Stollen (10, 11) einen bezüglich der Breite der Gummiraupenkette (6) mittleren Abschnitt (10) und von dem mittleren Abschnitt diagonal rückwärts in Richtung des rechten und linken Randes verlaufende Abzweigungen (11) umfaßt, der mittlere Abschnitt ein sich in Richtung von der Vorder- zur Rückseite der Gummiraupenkette erstreckendes Band bildet und die Abzweigungen einander im mittleren Abschnitt (10) kreuzen.

8. Gummiraupenkette eines Raupenfahrzeugs nach Anspruch 5, bei der entsprechend der Abnahme des sich in Richtung von der Vorder- zur Rückseite ergebenden Maßes der Oberfläche der Stollenoberseite (13) jeder Abzweigung der Gummiraupenkette (6) das sich in Richtung von der Vorder- zur Rückseite ergebende Maß jeder Rille (12) zwischen den benachbarten Oberflächen der Stollenoberseiten vom mittleren Abschnitt in Richtung des rechten und linken Randes der Gummiraupenkette größer wird, schräge Flächen (15, 16) zwischen der Oberfläche der Stollenoberseite und einer in einer bestimmten Tiefe zur Oberfläche der Stollenoberseite vorhandenen Rillengrundfläche (14) entstehen und die schräge Fläche (15) an der Vorderseite des Stollens als eine Fläche ausgeführt ist, bei der der Neigungswinkel vom mittleren Abschnitt zum rechten und linken Rand hin immer kleiner wird, und die schräge Fläche (16) an der Rückseite des Stollens als eine Fläche ausgeführt ist, die einen konstanten Neigungswinkel vom mittleren Abschnitt zum rechten und linken Rand hin hat.

9. Gummiraupenkette eines Raupenfahrzeugs nach Anspruch 1, bei der eine Vielzahl von Kernsträngen (7 8) in der Nähe der Oberflächen zumindest der Oberseiten oder der Unterseiten der Kerneinlagen (1) in die Gummiraupenkette (6) eingebettet ist und sich in Richtung von der Vorder- zur Rückseite der Gummiraupenkette erstreckt.

10. Gummiraupenkette eines Raupenfahrzeugs nach Anspruch 9, bei der die Gummiraupenkette (6) einen bestimmten Winkel aufweist, so daß sich Abrollflächen der Kettengliedlaufschienen (4) der benachbarten Kerneinlagen (1) in Richtung Rollenabrollfläche neigen.

11. Gummiraupenkette eines Raupenfahrzeugs nach Anspruch 8, bei der jede in die Gummiraupenkette (6) eingebettete Kerneinlage (1) einen zur Gewährleistung des Eingriffs mit dem Antriebsrad dienenden und in einem mittleren Abschnitt der Kerneinlage in bezug auf die Breite der Gummiraupenkette befindlichen Eingriffsabschnitt (2) sowie Flügelabschnitte (5) rechts und links vom Eingriffsabschnitt hat, und das sich in Richtung von der Vorder- zur Rückseite ergebende Maß des Eingriffsabschnitts in etwa gleich dem sich in Richtung von der Vorder- zur Rückseite ergebenden Maß der Flügelabschnitte ist, und die Kerneinlage des weiteren ein Paar Führungsnocken (3) und eine Abrollfläche der Kettengliedlautschienen (4) besitzt, die sich durchgehend rechts und links vom Eingriffsabschnitt erstrecken und deren Positionen rechts und links in Richtung von der Vorder- zur Rückseite gegeneinander versetzt sind, und bei der eine Vielzahl von Kernsträngen (7, 8) in der Nähe der Oberflächen zumindest der Oberseiten oder der Unterseiten der Kerneinlagen vorgesehen ist und sich in Richtung von der Vorder- zur Rückseite der Gummiraupenkette erstreckt.

**Revendications**

1. Chenille en caoutchouc (6) d'un véhicule chenillé, dans laquelle des organes centraux (1) sont noyés dans ladite chenille en caoutchouc et agencés de façon à s'engager, en série, avec chaque dent d'une roue d'entraînement, et des trous d'engagement (9) pour s'engager avec ladite roue d'entraînement sont formés entre des organes centraux voisins et dans une partie centrale dans la largeur de ladite chenille en caoutchouc, ladite chenille en caoutchouc d'un véhicule chenillé étant caractérisée en ce que :

- une sculpture (10,11) est formée sur la surface de contact avec le sol de ladite chenille en caoutchouc (6) de façon à s'étendre au travers des deux parties droite et gauche des plans de projection de plus de deux organes centraux adjacents (1) et de jeux entre lesdits organes centraux adjacents,

- une partie de ladite sculpture est formée de façon à avoir une surface s'étendant de façon continue tout autour de ladite chenille en caoutchouc (6),

- ladite sculpture est composée d'une partie centrale (10) par rapport à la largeur de ladite chenille en caoutchouc (6), et de parties branchées (11) s'étendant de ladite partie centrale (10) en diagonale en arrière vers les bords droit et gauche, et lesdites parties branchées (11) se coupant l'une l'autre à ladite partie centrale (10).

2. Chenille en caoutchouc d'un véhicule chenillé selon la revendication 1, dans laquelle ladite sculpture (10,11) présente une forme réalisée entre deux arcs ayant leurs centres dans ladite partie centrale (10) de ladite chenille en caoutchouc (6).

3. Chenille en caoutchouc d'un véhicule chenillé selon la revendication 1, dans laquelle ladite sculpture (10,11) est composée de sculptures s'étendant dans les directions avant-arrière, lesdites sculptures étant prévues aux bords droit et gauche de ladite chenille en caoutchouc (6) et également entre ladite partie centrale (10) et lesdits bords droit et gauche, et dans laquelle lesdites sculptures prévues entre ladite partie centrale et lesdits bords droit et gauche sont décalées desdites sculptures prévues auxdits bords droit et gauche d'un pas desdits organes centraux (1).

4. Chenille en caoutchouc d'un véhicule chenillé selon la revendication 1, dans laquelle ladite sculpture (10,11) est composée de ladite partie centrale (10) et d'une partie branchée droite, s'étendant de ladite partie centrale (10) en diagonale vers le haut, vers le bord droit et une partie branchée gauche s'étendant de ladite partie centrale (10) en diagonale vers le bas, vers le bord gauche, et dans laquelle ladite partie branchée droite et ladite partie branchée gauche sont parallèles l'une par rapport à l'autre.

5. Chenille en caoutchouc d'un véhicule chenillé selon la revendication 1, dans laquelle ladite sculpture (10,11) est composée de ladite partie centrale (10) prévue entre des trous d'engagement voisins (9) et des parties branchées droite et gauche (11) s'étendant de ladite partie centrale, en diagonale, vers l'arrière, vers les bords droit et gauche de ladite chenille en caoutchouc (6), lesdites parties branchées droite et gauche étant décalées l'une par rapport à l'autre d'un pas desdits organes centraux (1) et dans laquelle la dimension directionnelle avant-arrière d'une surface de dessus des sculptures (13) de chaque partie branchée diminue de ladite partie centrale vers les bords droit et gauche de ladite chenille en caoutchouc, et ladite partie centrale et lesdites parties branchées forment la surface de dessus des sculptures de ladite partie centrale (10) présentant une forme de 《U 》 entourant chaque trou d'engagement sur trois côtés, et ladite surface de dessus des sculptures de ladite partie centrale forme des zigzags de façon continue tout autour de la périphérie de ladite chenille en caoutchouc.

6. Chenille en caoutchouc d'un véhicule chenillé selon la revendication 1,
dans laquelle ladite sculpture (10,11) est composée d'une sculpture prévue dans ladite partie centrale (10) de ladite chenille en caoutchouc (6) et de sculptures prévues sur les bords droit et gauche de ladite chenille en caoutchouc, et lesdites trois sculptures s'étendent parallèlement l'une par rapport à l'autre dans les directions avant-arrière de ladite chenille en caoutchouc.

7. Chenille en caoutchouc d'un véhicule chenillé selon la revendication 1,
dans laquelle ladite sculpture (10,11) est composée d'une partie centrale (10) par rapport à la largeur de ladite chenille en caoutchouc (6) et de parties branchées (11) s'étendant de ladite partie centrale en diagonale, en arrière vers les bords droit et gauche, et ladite partie centrale est formée comme une ceinture s'étendant dans les directions avant-arrière de ladite chenille en caoutchouc et lesdites parties branchées se coupant l'une l'autre à ladite partie centrale .

8. Chenille en caoutchouc d'un véhicule chenillé selon la revendication 5,
dans laquelle en correspondance à la dimension directionnelle avant-arrière de ladite surface de dessus des sculptures (13) de chaque partie branchée de ladite chenille en caoutchouc (6) qui diminue, la dimension directionnelle avant-arrière de chaque rainure (12) formée entre lesdites surfaces voisines de dessus des sculptures devient plus grande de ladite partie centrale vers lesdits bords droit et gauche de ladite chenille en caoutchouc, et des surfaces obliques (15,16) sont formées entre ladite surface de dessus des sculptures et une surface de fond de rainure (14) formée à une profondeur prédéterminée depuis ladite surface de sculptures, et la surface oblique (15) sur le côté avant de ladite sculpture est formée comme un plan dans lequel l'angle d'inclinaison diminue de ladite partie centrale vers lesdits bords droit et gauche, et la surface inclinée (16) sur le côté arrière de ladite sculpture est formée comme un plan ayant un angle d'inclinaison uniforme de ladite partie centrale auxdits bords droit et gauche.

9. Chenille en caoutchouc d'un véhicule chenillé selon la revendication 1,
dans laquelle plusieurs lignes centrales (7,8) sont prévues proches d'au moins une des surfaces supérieures et des surfaces inférieures desdits organes centraux (1) noyés dans ladite chenille en caoutchouc (6), et s'étendent dans les directions avant-arrière de ladite chenille en caoutchouc

10. Chenille en caoutchouc d'un véhicule chenillé selon la revendication 9,
dans laquelle ladite chenille en caoutchouc (6) présente un angle prédéterminé de sorte que des surfaces de rails de roulement (4) d'organes centraux voisins (1) se courberont vers le côté de roulement.

11. Chenille en caoutchouc d'un véhicule chenillé selon la revendication 8,
dans laquelle chacun desdits organes centraux (1) noyés dans ladite chenille en caoutchouc (6) présentent une partie d'engagement (2) pour s'engager avec ladite roue d'entraînement et qui est prévue dans une partie centrale dudit organe central par rapport à la largeur de ladite chenille en caoutchouc, et présente des parties d'ailes (5) prévues sur les côtés droit et gauche de ladite partie d'engagement, et la dimension directionnelle avant-arrière de ladite partie d'engagement est approximativement égale à la dimension directionnelle avant-arrière desdites parties d'ailes, et présente de plus une paire de nervures de guidage (3) et une surface de rails de roulement (4) qui sont prévues de façon continue sur chacun des côtés droit et gauche de ladite partie d'engagement, dont les positions dans chacun des côtés droit et gauche sont décalées dans la direction avant-arrière, et dans laquelle plusieurs lignes centrales (7,8) sont prévues proches d'au moins une des surfaces supérieures et des surfaces inférieures desdits organes centraux et s'étendent dans les directions avant-arrière de ladite chenille en caoutchouc.

FIG. 1

FIG. 2

FIG. 3

FIG. 4

FIG. 5

$\dfrac{\theta}{2}$

(a)

$\theta$

(b)

FIG. 6

(a)

(b)

FIG. 7

FIG. 8

FIG. 9

FIG. 10

FIG. 11

(a)

(b)

(c)

# FIG.12

FIG.13

FIG.14

FIG.15

(a)

(b)

FIG.16